(19) Europäisches Patentamt
European Patent Office
Office européen des brevets

(11) **EP 3 789 735 B1**

(12) **EUROPÄISCHE PATENTSCHRIFT**

(45) Veröffentlichungstag und Bekanntmachung des Hinweises auf die Patenterteilung:
**10.11.2021 Patentblatt 2021/45**

(51) Int Cl.:
**G01D 5/245** *(2006.01)*          **G01D 5/347** *(2006.01)*

(21) Anmeldenummer: **19195318.1**

(22) Anmeldetag: **04.09.2019**

(54) **POSITIONSMESSEINRICHTUNG**

POSITION MEASURING DEVICE

DISPOSITIF DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.03.2021 Patentblatt 2021/10**

(73) Patentinhaber: **Dr. Johannes Heidenhain GmbH 83301 Traunreut (DE)**

(72) Erfinder:
- **HAIBLE, Pascal 83308 Trostberg (DE)**
- **BARTLECHNER, Alois 83349 Palling (DE)**
- **GRUBER, Sebastian 84375 Kirchdorf (DE)**

(56) Entgegenhaltungen:
**EP-A1- 3 527 951          EP-A2- 1 202 025
DE-A1-102004 006 067      DE-A1-102013 110 808
DE-A1-102018 108 882**

**Beschreibung**

## GEBIET DER TECHNIK

Die vorliegende Erfindung betrifft eine Positionsmesseinrichtung nach dem Oberbegriff des Anspruchs 1.

## STAND DER TECHNIK

Eine gattungsgemäße Positionsmesseinrichtung ist aus DE 10 2018 108 882 A1 bekannt. In einer linearen Skala sind eine Referenzursprungsmarkierungsanordnung und eine Neigungsursprungsmarkierungsanordnung, die eine Neigungsmarkierungsanordnung ist, in einem Ursprungsmarkierungsbereich vorgesehen. Da die Referenzursprungsmarkierungsanordnung zu X-Koordinaten parallel ist, wird ein X-Richtungs-Ursprungssignal korrekt erzeugt. Andererseits wird für die Y-Richtung, in der keine Ursprungsmarkierung vorgesehen ist, der Abstand zwischen einer Referenzursprungsmarkierung und einer Neigungsursprungsmarkierung detektiert. Eine absolute Y-Richtungs-Position wird gemäß dem Abstand bestimmt.

Positionsmesseinrichtungen mit einem bzw. einer mehrere Referenzmarken aufweisenden Maßstab oder Maßverkörperung sind in EP 3 527 951 A1 und DE 10 2004 006 067 A1 offenbart.

## ZUSAMMENFASSUNG DER ERFINDUNG

Der Erfindung liegt die Aufgabe zugrunde, eine Positionsmesseinrichtung anzugeben, die einfach und kompakt aufgebaut ist und mit der eine präzise Bestimmung einer Absolutpositionsinformation in einer zu einer Hauptmessrichtung senkrecht verlaufenden weiteren (zweiten) Messrichtung ermöglicht wird.

Diese Aufgabe wird erfindungsgemäß durch eine Positionsmesseinrichtung mit den Merkmalen des Anspruchs 1 gelöst.

Die erfindungsgemäß ausgebildete Positionsmesseinrichtung umfasst einen Trägerkörper, der eine erste Messteilung, eine zweite Messteilung und eine Referenzmarke aufweist, eine erste Abtasteinheit zum Abtasten der ersten Messteilung und zum Erzeugen von ersten Abtastsignalen, eine zweite Abtasteinheit zum Abtasten der zweiten Messteilung und zum Erzeugen von zweiten Abtastsignalen und eine dritte Abtasteinheit zum Abtasten der Referenzmarke und zum Erzeugen eines Referenzimpulses. Die erste Messteilung umfasst mehrere entlang einer ersten Messrichtung (Hauptmessrichtung) periodisch angeordnete Teilungsstrukturen. Die Teilungsstrukturen der ersten Messteilung erstrecken sich jeweils parallel zu einer ersten Richtung. Die zweite Messteilung umfasst mehrere entlang einer zweiten Messrichtung periodisch angeordnete Teilungsstrukturen. Die erste Messrichtung und die zweite Messrichtung verlaufen senkrecht zueinander.

Die Referenzmarke erstreckt sich in einer zweiten Richtung. Die erste Richtung und die zweite Richtung bilden einen von 0° verschiedenen Winkel zueinander. Die Positionsmesseinrichtung ist derart ausgebildet, dass in Abhängigkeit der ersten Abtastsignale und des Referenzimpulses eine Phasenlage des Referenzimpulses bestimmt wird. Die Positionsmesseinrichtung ist derart ausgebildet, dass in Abhängigkeit der Phasenlage des Referenzimpulses eine erste Absolutposition in der zweiten Messrichtung bestimmt wird.

Vorzugsweise gibt die Phasenlage des Referenzimpulses eine Absolutpositionsinformation in der zweiten Messrichtung wieder.

Es ist vorteilhaft, wenn die Phasenlage des Referenzimpulses in Bezug auf eine durch die ersten Abtastsignale bestimmte Referenzphasenlage definiert ist und in einem Bereich von -90° bis +90°, vorzugsweise im Bereich von -60° bis +60°, liegt.

Vorzugsweise entspricht die Referenzphasenlage einer Position des Signalverlaufs der ersten Abtastsignale, bei der die ersten Abtastsignale positive Werte und einen gleichen Momentanwert haben.

Die Referenzphasenlage liegt insbesondere innerhalb einer durch den Referenzimpuls bestimmten Signalperiode der ersten Abtastsignale.

In vorteilhafter Weise weist die Referenzmarke keine Referenzmarkenstruktur auf, die sich in der ersten Richtung, insbesondere parallel zur zweiten Messrichtung, erstreckt.

Vorzugsweise sind die erste Messteilung und die Referenzmarke benachbart zueinander entlang der zweiten Messrichtung angeordnet. Die zweite Messteilung und die Referenzmarke sind beispielsweise benachbart zueinander entlang der zweiten Messrichtung angeordnet.

Alternativ kann die Referenzmarke eine in die erste Messteilung oder in die zweite Messteilung integrierte Referenzmarke sein.

Vorzugsweise sind die erste bis dritte Abtasteinheit in eine gemeinsame Abtastkopfeinheit integrierte Abtasteinheiten. Die Positionsmesseinrichtung ist insbesondere dazu ausgebildet, die Absolutpositionsinformation in der zweiten Messrichtung zu bestimmen, ohne dass eine Relativbewegung zwischen der Abtastkopfeinheit und dem Trägerkörper in der zweiten Messeinrichtung erfolgt. Dadurch kann zur Herstellung eines absoluten Bezugs der zweiten Messteilung in der zweiten Messrichtung auf eine Bewegung der Abtastkopfeinheit relativ zum Trägerkörper in der zweiten Messrichtung verzichtet werden.

Die erste Messteilung und die zweite Messteilung sind insbesondere Inkrementalteilungen.

Die ersten Abtastsignale können eine durch die erste Messteilung bestimmte Signalperiode haben. Die zweiten Abtastsignale können eine durch die zweite Messteilung bestimme Signalperiode haben. Beispielsweise sind die Signalperiode der ersten Abtastsignale und die Signalperiode der zweiten Abtastsignale gleich groß.

Vorzugsweise sind die ersten Abtastsignale und die zweiten Abtastsignale jeweils zwei sinusförmige und gegeneinander phasenverschobene periodische Abtastsignale, insbesondere jeweils zwei um 90° gegeneinander phasenverschobene Abtastsignale.

Unter einer Absolutpositionsinformation in der zweiten Messrichtung wird insbesondere eine erste Absolutposition in der zweiten Messrichtung und/oder eine zweite Absolutposition in der zweiten Messrichtung verstanden. Die erste Absolutposition in der zweiten Messrichtung kann auch als grobe Absolutposition in der zweiten Messrichtung bezeichnet werden. Die zweite Absolutposition in der zweiten Messrichtung kann auch als feine Absolutposition in der zweiten Messrichtung bezeichnet werden.

Die Teilungsstrukturen der ersten Messteilung und die Teilungsstrukturen der zweiten Messteilung umfassen insbesondere jeweils Teilungsstriche. Die Teilungsstriche können entlang ihres Verlaufs gleiche Breiten aufweisen und durchgängig ausgebildet sein. Alternativ können die Teilungsstriche auch entlang ihres Verlaufs unterbrochen sein, beispielsweise zur Erzeugung einer sich über mehrere Teilungsstriche erstreckenden integrierten Referenzmarke.

Durch die Erfindung wird unter Ausnutzung einer Schrägstellung einer Referenzmarke eine präzise Bestimmung einer Absolutpositionsinformation in der zweiten Messrichtung ermöglicht. Schrägstellung bedeutet, dass die Referenzmarke anders ausgerichtet bzw. orientiert ist als die Teilungsstrukturen der ersten Messteilung. Die Referenzmarke dient einerseits zur Herstellung eines absoluten Bezugs der ersten Messteilung in der ersten Messrichtung, und andererseits dient die Referenzmarke zur Herstellung eines absoluten Bezugs der zweiten Messteilung in der zweiten Messrichtung. Dadurch kann auf ein zusätzliches Mittel zur Herstellung eines absoluten Bezugs der zweiten Messteilung in der zweiten Messrichtung, insbesondere eine zusätzliche Referenzmarke oder eine absolute Teilung, beispielsweise ausgebildet als Pseudo-Random-Code, verzichtet werden. Dies ermöglicht wiederum einen einfachen und kompakten Aufbau sowie eine Verringerung der Komplexität der Abtastung.

Ein Vorteil der Erfindung ist, dass das Referenzmarkensignal (d.h. der Referenzimpuls, der durch Abtastung der Referenzmarke erhalten wird) für die Auswertung einer Relativ- bzw. Absolutposition in der ersten Messrichtung weiterhin nutzbar bzw. kompatibel bleibt.

Vorteilhafte Ausbildungen der Erfindung entnimmt man den abhängigen Ansprüchen.

Weitere Einzelheiten und Vorteile der vorliegenden Erfindung werden anhand der nachfolgenden Beschreibung von möglichen Ausgestaltungen der Erfindung in Verbindung mit den Figuren erläutert.

## KURZE BESCHREIBUNG DER ZEICHNUNGEN

Es zeigen

Figur 1     eine perspektivische Ansicht einer beispielhaften Positionsmesseinrichtung mit einem Trägerkörper und einer Abtastbaugruppe mit einer ersten bis dritten Abtasteinheit;

Figur 2A    eine Detailansicht der Positionsmesseinrichtung nach Fig. 1 im Bereich der Abtastbaugruppe in einem ersten Zustand;

Figur 2B    eine Detailansicht der Positionsmesseinrichtung nach Fig. 1 im Bereich der Abtastbaugruppe in einem zweiten Zustand;

Figur 3     ein Blockdiagramm einer beispielhaften Auswerteeinheit der Positionsmesseinrichtung mit einer Einheit zur Bestimmung einer Phasenlage eines Referenzimpulses;

Figur 4     ein Blockdiagramm einer beispielhaften Auswerteeinheit der Positionsmesseinrichtung mit einer Einheit zur Bestimmung einer ersten Absolutposition und einer Einheit zur Bestimmung einer zweiten Absolutposition;

Figur 5     beispielhafte Signalverläufe von Signalen, die in der Auswerteeinheit nach Figur 3 verarbeitet werden;

Figur 6     eine schematische Darstellung zur Veranschaulichung eines beispielhaften linearen Zusammenhangs zwischen einer ersten Absolutposition und einer Phasenlage eines Referenzimpulses; und

Figur 7     ein Blockdiagramm einer beispielhaften Signalverarbeitungseinheit der Positionsmesseinrichtung.

## BESCHREIBUNG DER AUSFÜHRUNGSFORMEN

Gleiche Elemente oder funktionell gleiche Elemente sind in den Figuren mit gleichen Bezugszeichen versehen.

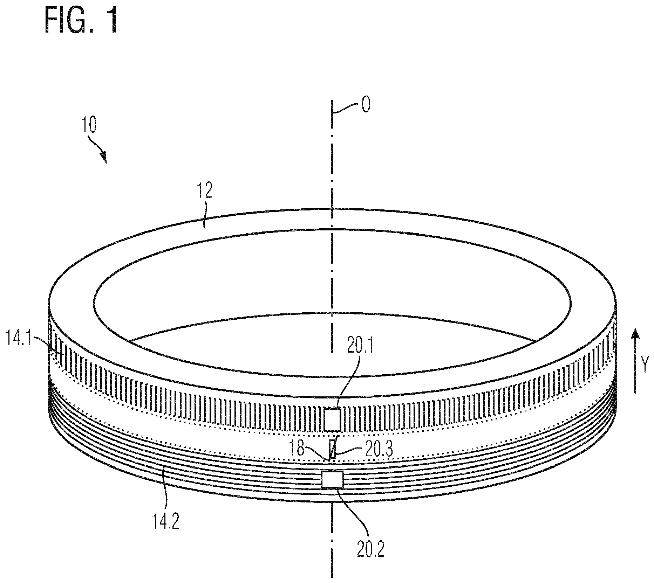

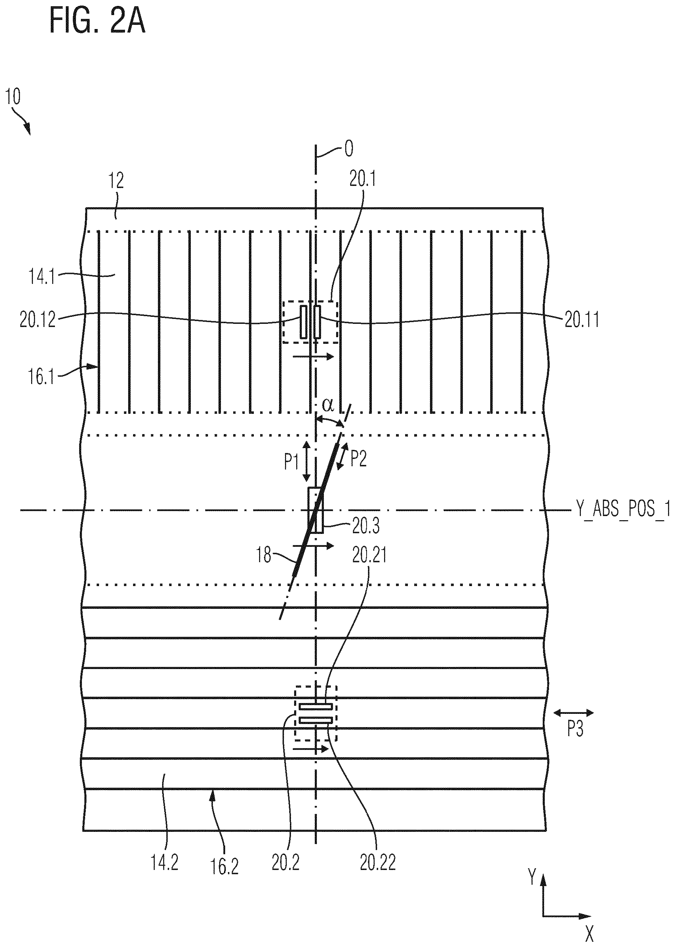

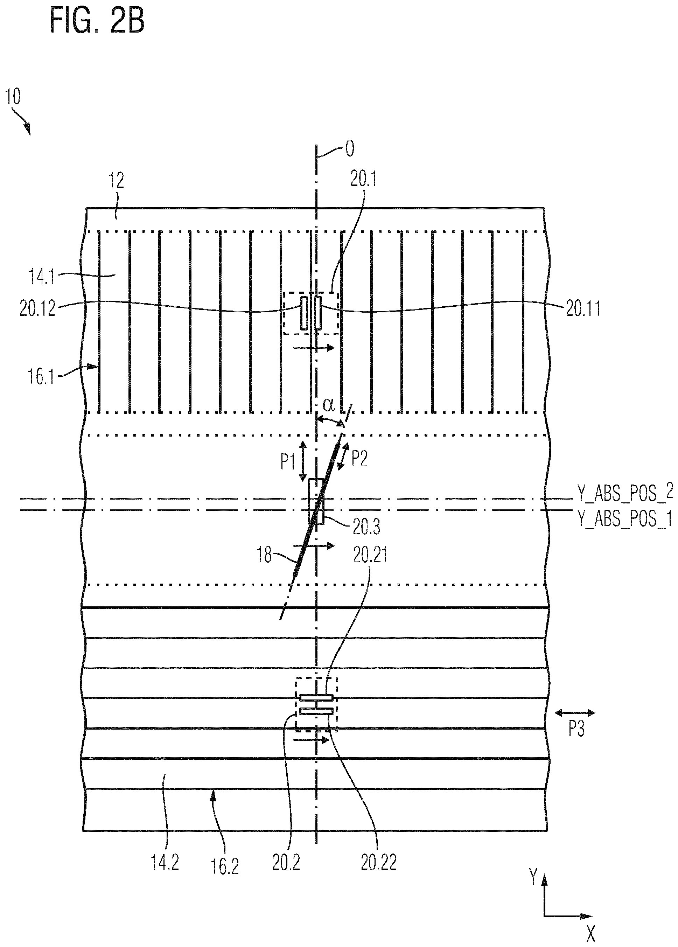

Eine beispielhafte Positionsmesseinrichtung 10 ist in den Figuren 1 und 2A, 2B gezeigt. Die Positionsmesseinrichtung 10 dient zur Messung der Relativlage zweier zueinander beweglicher Objekte in einer ersten Messrichtung X und in einer zweiten Messrichtung Y. Die erste Messrichtung X entspricht einer in Bezug auf eine Referenzachse O definierten tangentialen Richtung. Die zweite Messrichtung Y entspricht einer Richtung, die parallel zur Referenzachse O verläuft. Die erste Messrichtung X kann auch als Umfangsrichtung bezeichnet werden. Die zweite Messrichtung Y kann auch als axiale Richtung bezeichnet werden. Die erste Messrichtung X ist die Hauptmessrichtung.

Die Positionsmesseinrichtung 10 weist einen Trägerkörper 12 und eine Abtastbaugruppe mit einer ersten bis dritten Abtasteinheit 20.1 bis 20.3 auf. Der Trägerkörper 12 weist eine erste Messteilung 14.1, eine zweite Messteilung 14.2 und eine Referenzmarke 18 auf. Die erste Abtasteinheit 20.1 dient zum Abtasten der ersten Messteilung 14.1 und zum Erzeugen von ersten Abtastsignalen. Die zweite Abtasteinheit 20.2 dient zum Abtasten der zweiten Messteilung 14.2 und zum Erzeugen von zweiten Abtastsignalen. Die dritte Abtasteinheit 20.3 dient zum Abtasten der Referenzmarke 18 und zum Erzeugen eines Referenzimpulses. Die erste bis dritte Abtasteinheit 20.1 bis 20.3 sind relativ zum Trägerkörper 12 derart beweglich angeordnet, dass eine Abtastung der ersten und zweiten Messteilung 14.1, 14.2 sowie der Referenzmarke 18 erfolgen kann. Vorzugsweise sind die erste bis dritte Abtasteinheit 20.1 bis 20.3 an einem gemeinsamen Halter befestigt, so dass diese gemeinsam relativ zum Trägerkörper 12 bewegt werden können.

Wie in Fig. 1 gezeigt, sind die erste Messteilung 14.1 und die Referenzmarke 18 benachbart zueinander entlang der zweiten Messrichtung Y angeordnet. Ferner sind die zweite Messteilung 14.2 und die Referenzmarke 18 benachbart zueinander entlang der zweiten Messrichtung Y angeordnet. D.h., die Referenzmarke 18 ist in der zweiten Messrichtung Y zwischen der ersten und zweiten Messteilung 14.1, 14.2 angeordnet. Eine gemeinsame Bewegung der ersten bis dritten Abtasteinheit 20.1 bis 20.3 relativ zum Trägerkörper 12 in der ersten Messrichtung X ist in Fig. 2A, 2B durch Pfeile angedeutet.

In Fig. 2A, 2B sind eine erste bis dritte Richtung P1 bis P3 gezeigt. Die erste Richtung P1 verläuft senkrecht zur ersten Messrichtung X. Die dritte Richtung P3 verläuft senkrecht zur zweiten Messrichtung Y. Die erste und zweite Messrichtung X, Y verlaufen senkrecht zueinander (vgl. das XY-Koordinatensystem von Fig. 2A, 2B). Wie in Fig. 2A, 2B gezeigt, umfasst die erste Messteilung 14.1 mehrere entlang der ersten Messrichtung X periodisch angeordnete Teilungsstrukturen 16.1. Die Teilungsstrukturen 16.1 der ersten Messteilung 14.1 erstrecken sich jeweils parallel zur ersten Richtung P1. Die zweite Messteilung 14.2 umfasst mehrere entlang der zweiten Messrichtung Y periodisch angeordnete Teilungsstrukturen 16.2. Die Teilungsstrukturen 16.2 der zweiten Messteilung 14.2 erstrecken sich jeweils parallel zur dritten Richtung P3. Die Referenzmarke 18 erstreckt sich in der zweiten Richtung P2. Die erste Richtung P1 und die zweite Richtung P2 bilden einen von 0° verschiedenen Winkel $\alpha$ zueinander. Insbesondere verläuft die zweite Richtung P2 nicht parallel zur zweiten Messrichtung Y. Der Winkel a ist vorzugsweise größer als 0° und kleiner als 90°.

Die erste und zweite Messteilung 14.1, 14.2 sind insbesondere Inkrementalteilungen. Beispielsweise sind die Teilungsperiode der ersten Messteilung 14.1 und die Teilungsperiode der zweiten Messteilung 14.2 gleich groß. Die ersten Abtastsignale haben eine durch die erste Messteilung 14.1 bestimmte Signalperiode. Die zweiten Abtastsignale haben eine durch die zweite Messteilung 14.2 bestimmte Signalperiode. Wenn die Teilungsperiode der ersten Messteilung 14.1 und die Teilungsperiode der zweiten Messteilung 14.2 gleich groß sind, sind auch die Signalperiode der ersten Abtastsignale und die Signalperiode der zweiten Abtastsignale gleich groß.

Die Referenzmarke 18 weist vorzugsweise eine einzige Referenzmarkenstruktur auf. Alternativ können auch mehrere abstandscodierte Referenzmarkenstrukturen vorgesehen sein.

Die erste Abtasteinheit 20.1 weist einen ersten Sensor 20.11 und einen zweiten Sensor 20.12 auf. Die zweite Abtasteinheit 20.2 weist einen ersten Sensor 20.21 und einen zweiten Sensor 20.22 auf. Die beiden Sensoren 20.11, 20.12 der ersten Abtasteinheit 20.1 dienen zum Erzeugen von zwei sinusförmigen und gegeneinander phasenverschobenen periodischen Abtastsignalen, die die ersten Abtastsignale bilden. Die beiden Sensoren 20.21, 20.22 der zweiten Abtasteinheit 20.2 dienen zum Erzeugen von zwei sinusförmigen und gegeneinander phasenverschobenen periodischen Abtastsignalen, die die zweiten Abtastsignale bilden. Die dritte Abtasteinheit 20.3 weist einen einzigen Sensor für die Erzeugung des Referenzimpulses auf.

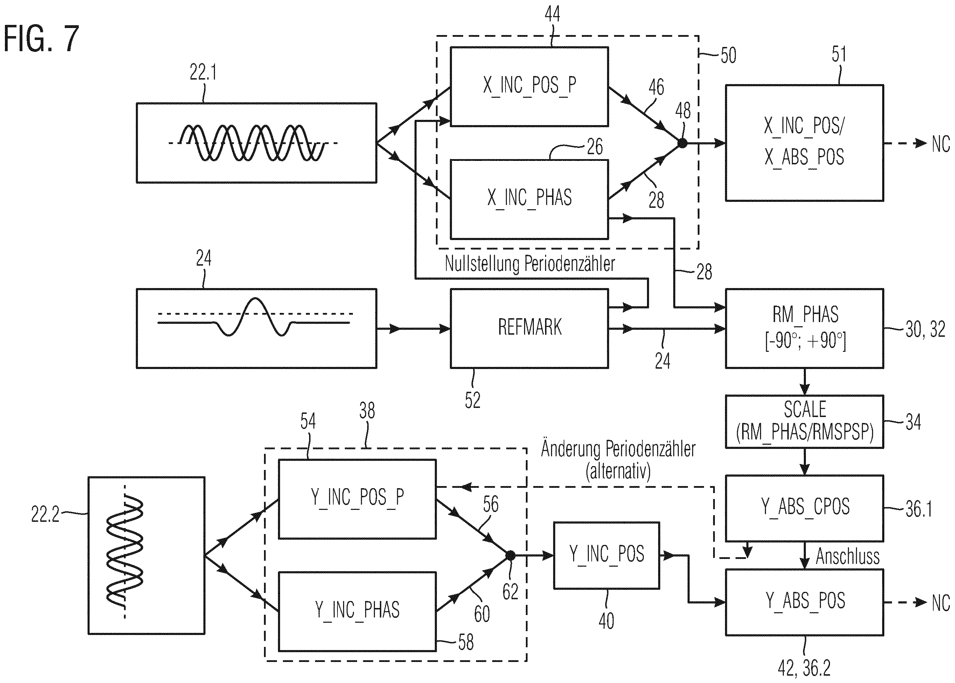

Bei einer Relativbewegung zwischen der ersten bis dritten Abtasteinheit 20.1 bis 20.3 und dem Trägerkörper 12 in der zweiten Messrichtung Y, d.h. parallel zur Referenzachse O, ändert sich insbesondere der durch die dritte Abtasteinheit 20.3 erzeugte Referenzimpuls (bzw. dessen Phasenlage). In Fig. 2A sind die erste bis dritte Abtasteinheit 20.1 bis 20.3 in einem ersten, d.h. in der zweiten Messrichtung Y nicht verschobenen Zustand dargestellt. Dieser erste Zustand entspricht einem Ausgangszustand (bzw. Referenzzustand). Der erste Zustand ist einem ersten Messwert (Y_ABS_POS_1) einer zu bestimmenden hochaufgelösten Absolutposition in der zweiten Messrichtung Y (Y_ABS_POS) zugeordnet. Für den ersten Messwert Y_ABS_POS_1 gilt beispielsweise Y_ABS_POS_1 = 0. In Fig. 2B sind die erste bis dritte Abtasteinheit 20.1 bis 20.3 in einem zweiten, d.h. in der zweiten Messrichtung Y verschobenen Zustand dargestellt. Der zweite Zustand ist einem zweiten Messwert (Y_ABS_POS_2) der zu bestimmenden hochaufgelösten Absolutposition in der zweiten Messrichtung Y (Y_ABS_POS) zugeordnet. Für den zweiten Messwert Y_ABS_POS_2 gilt beispielsweise Y_ABS_POS_2 > 0. Die Bestimmung von Y_ABS_POS wird insbesondere im Zusammenhang mit Fig. 7 näher erläutert.

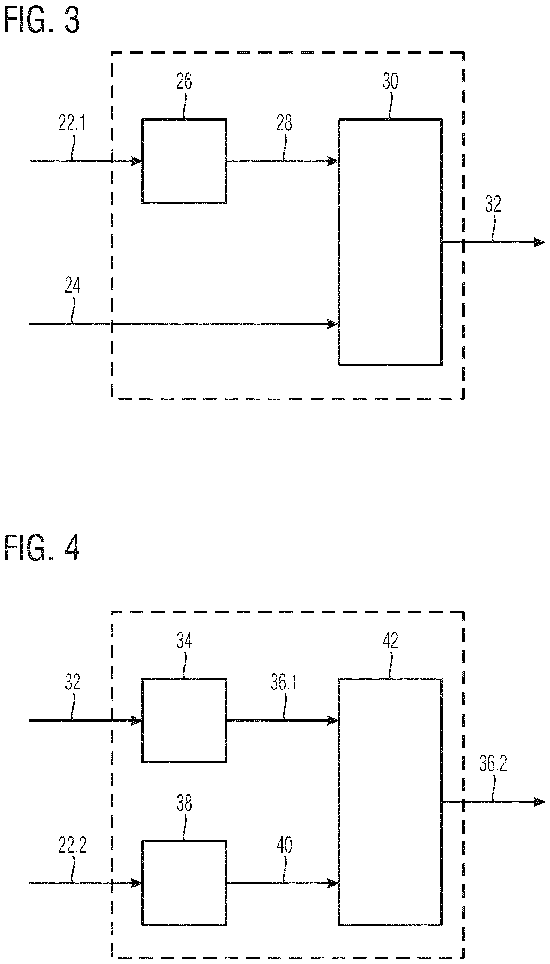

In den Figuren 3 und 4 sind Blockdiagramme von beispielhaften Auswerteeinheiten der Positionsmesseinrichtung 10 gezeigt.

Die Auswerteeinheit nach Fig. 3 weist eine Einheit 26 zur Bestimmung eines Phasensignals und eine Einheit 30 zur Bestimmung einer Phasenlage des Referenzimpulses auf. Die Einheit 26 ist dazu ausgebildet, die ersten Abtastsignale 22.1 zu empfangen und ein Phasensignal 28 zu erzeugen. Die Einheit 30 ist dazu ausgebildet, in Abhängigkeit des Phasensignals 28 und des Referenzimpulses 24 eine Phasenlage 32 des Referenzimpulses 24 zu bestimmen. Durch die Blöcke (Einheiten) 26, 30 wird eine Einheit gebildet. Diese Einheit ist dazu ausgebildet, in Abhängigkeit der ersten Abtastsignale 22.1 und des Referenzimpulses 24 die Phasenlage 32 des Referenzimpulses 24 zu bestimmen.

Die Auswerteeinheit nach Fig. 4 weist eine Einheit 34 zur Bestimmung einer ersten Absolutposition, eine Einheit 38 zur Bestimmung einer Relativposition und eine Einheit 42 zur Bestimmung einer zweiten Absolutposition auf. Die Einheit 34 ist dazu ausgebildet, in Abhängigkeit der Phasenlage 32 des Referenzimpulses 24 eine erste Absolutposition 36.1 in der zweiten Messrichtung Y zu bestimmen. Die Einheit 38 ist dazu ausgebildet, in Abhängigkeit der zweiten Abtastsignale 22.2 eine Relativposition 40 in der zweiten Messrichtung Y zu bestimmen. Die Einheit 42 ist dazu ausgebildet, in Abhängigkeit der ersten Absolutposition 36.1 und der Relativposition 40 eine zweite Absolutposition 36.2 in der zweiten Messrichtung Y zu bestimmen.

Durch die Blöcke (Einheiten) 34, 38 und 42 wird eine Einheit gebildet. Diese Einheit ist dazu ausgebildet, in Abhängigkeit der Phasenlage 32 des Referenzimpulses 24 und der zweiten Abtastsignale 22.2 die zweite Absolutposition 36.2 in der zweiten Messrichtung Y zu bestimmen.

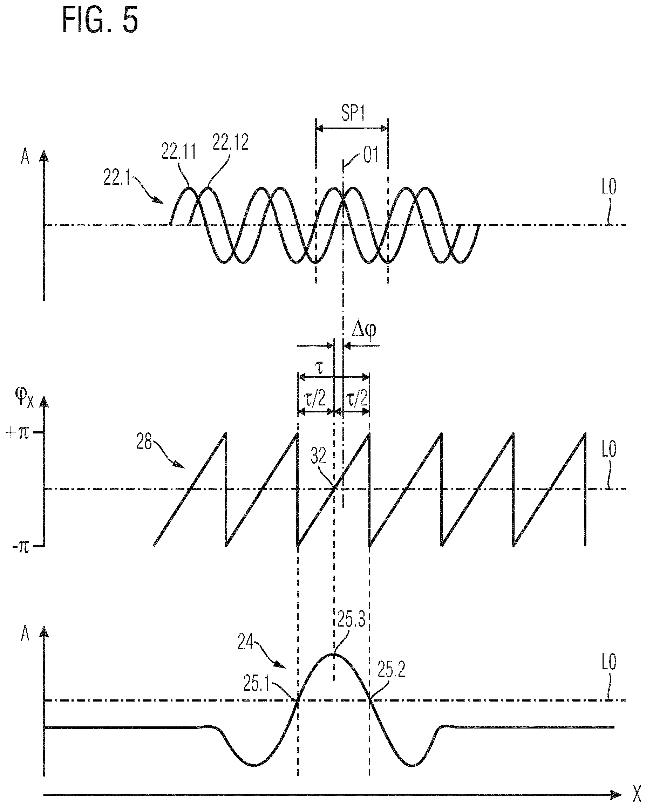

Fig. 5 zeigt beispielhafte Signalverläufe der Signale 22.1, 24, 28, die in der Auswerteeinheit nach Fig. 3 verarbeitet werden. Im oberen Abschnitt von Fig. 5 sind die ersten Abtastsignale 22.1 (Signalamplitude A) als Funktion des Orts (X-Position) dargestellt. Die Nulllinie ist im oberen Abschnitt von Fig. 5 mit L0 bezeichnet. Im mittleren Abschnitt von Fig. 5 ist das Phasensignal 28 (Phasensignalwert $\varphi_x$) als Funktion des Orts (X-Position) dargestellt. Die Nulllinie ist im mittleren Abschnitt von Fig. 5 mit L0 bezeichnet. Im unteren Abschnitt von Fig. 5 ist der Referenzimpuls 24 (Signalamplitude A) als Funktion des Orts (X-Position) dargestellt. Die Nulllinie ist im unteren Abschnitt von Fig. 5 mit L0 bezeichnet.

Die ersten Abtastsignale 22.1 umfassen ein durch den ersten Sensor 20.11 der ersten Abtasteinheit 20.1 erzeugtes erstes Signal 22.11 und ein durch den zweiten Sensor 20.12 der ersten Abtasteinheit 20.1 erzeugtes zweites Signal 22.12. Die beiden Signale 22.11, 22.12 sind jeweils sinusförmig und um 90° gegeneinander phasenverschoben. Ferner haben die beiden Signale 22.11, 22.12 eine gleiche Signalperiode. Die Signalperiode der ersten Abtastsignale 22.1 ist mit SP1 bezeichnet. Die Referenzphasenlage O1 entspricht einer Position des Signalverlaufs der ersten Abtastsignale 22.1, bei der die ersten Abtastsignale 22.1 positive Werte und einen gleichen Momentanwert haben. Das Phasensignal 28 ist ein von den ersten Abtastsignalen 22.1 beispielsweise unter Verwendung einer trigonometrischen Funktion abgeleitetes Signal. Das Phasensignal 28 hat die gleiche Signalperiode wie die ersten Abtastsignale 22.1. Der Referenzimpuls 24 hat zwei Nulldurchgänge 25.1, 25.2 und ein Maximum 25.3. Beispielsweise hat der Referenzimpuls 24 eine symmetrische Form. Die Breite des Referenzimpulses 24 ist durch die beiden Nulldurchgänge 25.1, 25.2 gegeben und mit τ bezeichnet. Das Maximum 25.3 liegt beispielsweise in der Mitte zwischen den beiden Nulldurchgängen 25.1, 25.2. Die in Fig. 5 veranschaulichte Phasenlage 32 des Referenzimpulses 24 entspricht einer beispielsweise durch eine phasenkorrekte Mittelung der Phasensignalwerte $\varphi_x$ an den X-Positionen der beiden Nulldurchgänge 25.1, 25.2 erhaltenen Phasenlage. In Fig. 5 ist zudem die Phasendifferenz $\Delta\varphi$ zwischen der Phasenlage 32 des Referenzimpulses 24 und der Referenzphasenlage O1 dargestellt.

Wie in Fig. 5 gezeigt, ist der Referenzimpuls 24 einer bestimmten Signalperiode (Signalperiode SP1) der ersten Abtastsignale 22.1 zugeordnet. Die Phasenlage 32 des Referenzimpulses 24 ist in Bezug auf die durch die ersten Abtastsignale 22.1 bestimmte Referenzphasenlage O1 definiert und liegt in einem Bereich von -90° bis +90°, vorzugsweise im Bereich von -60° bis +60°. Die Breite τ des Referenzimpulses 24 liegt, bezogen auf die ersten Abtastsignale 22.1, d.h. in Bezug auf die Signalperiode SP1, in einem Bereich von 180° bis 540°, vorzugsweise im Bereich von 300° bis 420°.

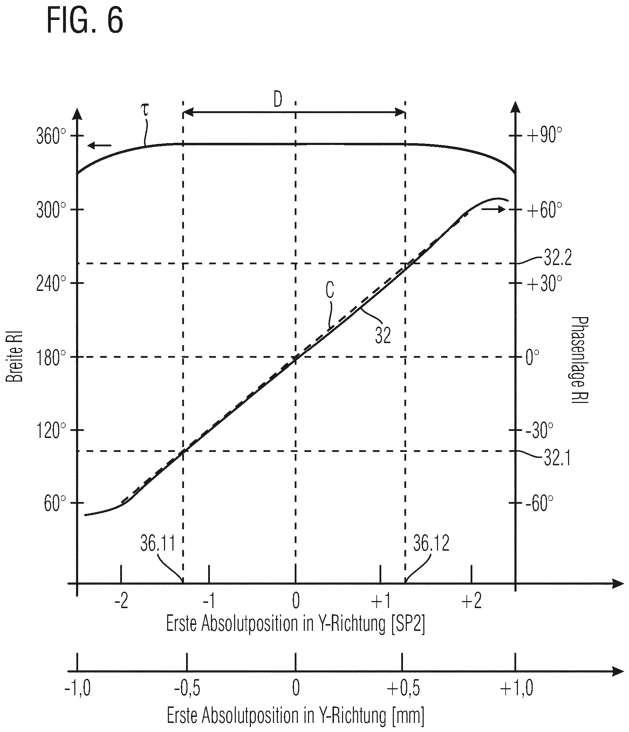

Fig. 6 zeigt eine schematische Darstellung zur Veranschaulichung eines beispielhaften linearen Zusammenhangs C. In Fig. 6 ist einerseits die Breite τ des Referenzimpulses 24 als Funktion der ersten Absolutposition 36.1 in der zweiten Messrichtung Y (in Signalperioden SP2 der zweiten Abtastsignale 22.2 bzw. in Millimetern) aufgetragen. Andererseits ist in Fig. 6 die Phasenlage 32 des Referenzimpulses 24 als Funktion der ersten Absolutposition 36.1 in der zweiten Messrichtung Y (in Signalperioden SP2 der zweiten Abtastsignale 22.2 bzw. in Millimetern) aufgetragen. Die in Fig. 6 gezeigte Kurve für die Phasenlage 32 des Referenzimpulses 24 entspricht einer zuvor ermittelten Messwertkurve. Der lineare Zusammenhang C entspricht einer linearen Approximation dieser Messwertkurve.

Wie in Fig. 6 gezeigt, liegt die Phasenlage 32 des Referenzimpulses 24 in einem durch einen ersten Grenzwert 32.1 und einen zweiten Grenzwert 32.2 definierten Bereich. Der erste Grenzwert 32.1 ist einem Minimum 36.11 einer in Abhängigkeit der Phasenlage 32 des Referenzimpulses 24 zu bestimmenden ersten Absolutposition 36.1 in der zweiten Messrichtung Y zugeordnet. Der zweite Grenzwert 32.2 ist einem Maximum 36.12 einer in Abhängigkeit der Phasenlage 32 des Referenzimpulses 24 zu bestimmenden ersten Absolutposition 36.1 in der zweiten Messrichtung Y zugeordnet. Durch das Minimum 36.11 und das Maximum 36.12 wird ein zulässiger Bereich D für die Bestimmung der ersten Absolutposition 36.1 in der zweiten Messrichtung Y definiert. Der zulässige Bereich D entspricht einer Anzahl von Signalperioden SP2 der zweiten Abtastsignale 22.2.

Diese Anzahl liegt insbesondere in einem Bereich von 2 bis 10 (z.B. 2,5 im Beispiel von Fig. 6).

Innerhalb des zulässigen Bereichs D ist die Breite τ des Referenzimpulses 24 im Wesentlichen konstant. Dies kann für eine Überprüfung der Qualität des durch die dritte Abtasteinheit 20.3 erzeugten Referenzimpulses 24 herangezogen werden.

Durch Kenntnis des linearen Zusammenhangs C ist eine vorbestimmte Zuordnungsvorschrift zum Zuordnen der Phasenlage 32 des Referenzimpulses 24 zur ersten Absolutposition 36.1 in der zweiten Messrichtung Y gegeben. Ferner kann durch Kenntnis des linearen Zusammenhangs C ein vorbestimmter Umrechnungsfaktor (z.B. 1/RMSPSP, wobei RMSPSP die Steigung der Geraden C ist) erhalten werden. Die Positionsmesseinrichtung 10 kann einerseits derart ausgebildet sein, dass die erste Absolutposition 36.1 in der zweiten Messrichtung Y unter Verwendung der vorgenannten vorbestimmten Zuordnungsvorschrift bestimmt wird. Andererseits kann die Positionsmesseinrichtung 10 derart ausgebildet sein, dass die erste Absolutposition 36.1 in der zweiten Messrichtung Y unter Verwendung des vorgenannten vorbestimmten Umrechnungsfaktors bestimmt wird.

In Bezug auf Fig. 6 ist die Phasenlage 32 des Referenzimpulses 24 insbesondere durch einen linearen Zusammenhang C gegeben. Der lineare Zusammenhang C ist durch eine Steigung RMSPSP ("Reference Mark Shift Per Signal Period") definiert. Diese Steigung RMSPSP beträgt mindestens 5° pro Signalperiode SP2 der zweiten Abtastsignale 22.2, vorzugsweise 20° oder 30° pro Signalperiode SP2 der zweiten Abtastsignale 22.2.

Fig. 7 zeigt ein Blockdiagramm einer beispielhaften Signalverarbeitungseinheit der Positionsmesseinrichtung 10. Im Blockdiagramm von Fig. 7 sind die ersten Abtastsignale 22.1, der Referenzimpuls 24 und die zweiten Abtastsignale 22.2 als Eingangssignale dargestellt. Die Signalverarbeitungseinheit nach Fig. 7 weist eine Einheit 50 zur Bestimmung einer Relativ- bzw. Absolutposition, eine Einheit 52 (REFMARK) zur Erkennung eines Referenzimpulses und zur Einstellung eines Periodenzählers und eine Einheit 38 zur Bestimmung einer Relativposition auf. Die Einheit 50 weist einen Periodenzähler 44 (X_INC_POS_P) und die Einheit 26 zur Bestimmung eines Phasensignals (X_INC_PHAS) auf. Die Einheit 38 weist einen Periodenzähler 54 (Y_INC_POS_P) und eine Einheit 58 zur Bestimmung eines Phasensignals (Y_INC_PHAS) auf. Die Einheit 50 ist dazu ausgebildet, in Abhängigkeit der ersten Abtastsignale 22.1 eine Relativ- bzw. Absolutposition 51 (X_INC_POS/X_ABS_POS) zu bestimmen. Die Einheit 52 ist einerseits dazu ausgebildet, in Abhängigkeit des Referenzimpulses 24 eine Nullstellung des Periodenzählers 44 zu bewirken. Andererseits ist die Einheit 52 dazu ausgebildet, den Referenzimpuls 24 an die Einheit 30 weiterzuleiten. Die Einheit 38 ist dazu ausgebildet, in Abhängigkeit der zweiten Abtastsignale 22.2 eine Relativposition 40 (Y_INC_POS) zu bestimmen. Die Relativ- bzw. Absolutposition 51 entspricht einer Relativ- bzw. Absolutposition in der ersten Messrichtung X. Die Relativposition 40 entspricht einer Relativposition in der zweiten Messrichtung Y.

Der Periodenzähler 44 ist dazu ausgebildet, durch Zählen von Signalperioden der ersten Abtastsignale 22.1 eine grob aufgelöste Relativ- bzw. Absolutposition in der ersten Messrichtung X am Ausgang 46 bereitzustellen. Bei einer Nullstellung des Periodenzählers 44 wird ein absoluter Bezug in der ersten Messrichtung X hergestellt (Referenzierung). Vor der Referenzierung wird am Ausgang 46 die grob aufgelöste Relativposition bereitgestellt. Nach der Referenzierung wird am Ausgang 46 die grob aufgelöste Absolutposition bereitgestellt. Die Einheit 50 weist zudem eine Verknüpfungseinheit (Knotenpunkt 48) auf. Diese Verknüpfungseinheit ist dazu ausgebildet, die Relativ- bzw. Absolutposition am Ausgang 46 mit dem durch die Einheit 26 erzeugten Phasensignal 28 zu verknüpfen, um die (fein aufgelöste) Relativ- bzw. Absolutposition 51 zu erhalten. Diese Relativ- bzw. Absolutposition 51 kann über eine Schnittstelle an eine Folgeelektronik (NC) weitergeleitet werden.

Der Periodenzähler 54 ist dazu ausgebildet, durch Zählen von Signalperioden der zweiten Abtastsignale 22.2 eine grob aufgelöste Relativposition in der zweiten Messrichtung Y am Ausgang 56 bereitzustellen. Die Einheit 38 weist zudem eine Verknüpfungseinheit (Knotenpunkt 62) auf. Diese Verknüpfungseinheit ist dazu ausgebildet, die Relativposition am Ausgang 56 mit dem durch die Einheit 58 erzeugten Phasensignal 60 zu verknüpfen, um die (fein aufgelöste) Relativposition 40 zu erhalten. Diese Relativposition 40 in der zweiten Messrichtung Y kann mit der ersten Absolutposition 36.1 in der zweiten Messrichtung Y (Y_ABS_CPOS) verknüpft werden, um die zweite Absolutposition 36.2 in der zweiten Messrichtung Y (Y_ABS_POS) zu erhalten. Die durch die Einheit 42 durchgeführte Verknüpfung zum Erhalten der zweiten Absolutposition 36.2 wird auch als "Anschluss" bezeichnet. Die zweite Absolutposition 36.2 in der zweiten Messrichtung Y kann über eine Schnittstelle zur Folgeelektronik (NC) weitergleitet werden.

Alternativ kann der Anschluss auch dadurch erreicht werden, dass eine Änderung des Periodenzählers 54 bewirkt wird (vgl. die gestrichelte Linie vom Block 36.1 zum Block 54 in Fig. 7).

In Bezug auf Fig. 7 kann die Positionsmesseinrichtung 10 derart ausgebildet sein, dass die zweite Absolutposition 36.2 in der zweiten Messrichtung Y in Abhängigkeit des von den zweiten Abtastsignalen 22.2 abgeleiteten Phasensignals 60 bestimmt wird. Ferner kann die Positionsmesseinrichtung 10 derart ausgebildet sein, dass in Abhängigkeit der zweiten Abtastsignale 22.2 die Relativposition 40 in der zweiten Messrichtung Y bestimmt wird, und dass die Relativposition 40 in der zweiten Messrichtung Y mit der ersten Absolutposition 36.1 in der zweiten Messrichtung Y verknüpft wird, um die zweite Absolutposition 36.2 in der zweiten Messrichtung Y zu erhalten.

Die Positionsmesseinrichtung 10 ist insbesondere derart ausgebildet, dass die Bestimmung der ersten Absolutposition 36.1 in der zweiten Messrichtung Y mit einer ersten Auflösung erfolgt, und dass die Bestimmung der zweiten Absolutposition 36.2 in der zweiten Messrichtung Y mit einer zweiten Auflösung erfolgt, wobei die erste Auflösung geringer als die zweite Auflösung ist. Dies wird durch den zuvor erwähnten Anschluss erreicht.

Wiederum mit Bezug auf Fig. 7 ist die Einheit 30 dazu ausgebildet, in Abhängigkeit des durch die Einheit 26 erzeugten Phasensignals 28 und des Referenzimpulses 24 die Phasenlage 32 des Referenzimpulses 24 (RM_PHAS) zu bestimmen. Die Einheit 34 (SCALE) ist dazu ausgebildet, die erste Absolutposition 36.1 in der zweiten Messrichtung Y durch Anwenden des vorbestimmten Umrechnungsfaktors (d.h. 1/RMSPSP) zu bestimmen, beispielsweise durch folgende Vorschrift:

$$Y\_ABS\_CPOS = RM\_PHAS \times 1/RMSPSP$$

Die Positionsmesseinrichtung 10 eignet sich insbesondere für den Einsatz in einer Spindel. Die erste und zweite Messteilung 14.1, 14.2 sowie die Referenzmarke 18 sind vorzugsweise magnetisch abtastbar ausgebildet.

Alternativ können die erste und zweite Messteilung 14.1, 14.2 sowie die Referenzmarke 18 optisch, induktiv oder kapazitiv abtastbar ausgebildet sein.

Die Erfindung ist nicht auf rotative Positionsmesseinrichtungen beschränkt. Die erfindungsgemäße Positionsmesseinrichtung kann auch eine lineare Positionsmesseinrichtung sein.

**Patentansprüche**

1. Positionsmesseinrichtung (10), mit

   einem Trägerkörper (12), der eine erste Messteilung (14.1), eine zweite Messteilung (14.2) und eine Referenzmarke (18) aufweist,
   einer ersten Abtasteinheit (20.1) zum Abtasten der ersten Messteilung (14.1) und zum Erzeugen von ersten Abtastsignalen (22.1),
   einer zweiten Abtasteinheit (20.2) zum Abtasten der zweiten Messteilung (14.2) und zum Erzeugen von zweiten Abtastsignalen (22.2), und
   einer dritten Abtasteinheit (20.3) zum Abtasten der Referenzmarke (18) und zum Erzeugen eines Referenzimpulses (24),
   wobei die erste Messteilung (14.1) mehrere entlang einer ersten Messrichtung (X) periodisch angeordnete Teilungsstrukturen (16.1) umfasst,
   wobei sich die Teilungsstrukturen (16.1) der ersten Messteilung (14.1) jeweils parallel zu einer ersten Richtung (P1) erstrecken,
   wobei die zweite Messteilung (14.2) mehrere entlang einer zweiten Messrichtung (Y) periodisch angeordnete Teilungsstrukturen (16.2) umfasst, wobei die erste Messrichtung (X) und die zweite Messrichtung (Y) senkrecht zueinander verlaufen,

   wobei sich die Referenzmarke (18) in einer zweiten Richtung (P2) erstreckt, wobei die erste Richtung (P1) und die zweite Richtung (P2) einen von 0° verschiedenen Winkel (α) zueinander bilden,

   **dadurch gekennzeichnet, dass** die Positionsmesseinrichtung (10) derart ausgebildet ist, dass in Abhängigkeit der ersten Abtastsignale (22.1) und des Referenzimpulses (24) eine Phasenlage (32) des Referenzimpulses (24) bestimmt wird, und dass die Positionsmesseinrichtung (10) derart ausgebildet ist, dass in Abhängigkeit der Phasenlage (32) des Referenzimpulses (24) eine erste Absolutposition (36.1) in der zweiten Messrichtung (Y) bestimmt wird.

2. Positionsmesseinrichtung (10) nach Anspruch 1, wobei die Positionsmesseinrichtung (10) derart ausgebildet ist, dass die erste Absolutposition (36.1) in der zweiten Messrichtung (Y) unter Verwendung einer vorbestimmten Zuordnungsvorschrift zum Zuordnen der Phasenlage (32) des Referenzimpulses (24) zur ersten Absolutposition (36.1) in der zweiten Messrichtung (Y) bestimmt wird.

3. Positionsmesseinrichtung (10) nach Anspruch 1, wobei die Positionsmesseinrichtung (10) derart ausgebildet ist, dass die erste Absolutposition (36.1) in der zweiten Messrichtung (Y) unter Verwendung eines vorbestimmten Umrechnungsfaktors bestimmt wird.

4. Positionsmesseinrichtung (10) nach einem der vorhergehenden Ansprüche, wobei die Positionsmesseinrichtung (10) derart ausgebildet ist, dass die Phasenlage (32) des Referenzimpulses (24) in Abhängigkeit eines von den ersten Abtastsignalen (22.1) abgeleiteten Phasensignals (28) bestimmt wird.

5. Positionsmesseinrichtung (10) nach einem der Ansprüche 1 bis 4, wobei die Positionsmesseinrichtung (10) derart ausgebildet ist, dass in Abhängigkeit der Phasenlage (32) des Referenzimpulses (24) und der zweiten Abtastsignale (22.2) eine zweite Absolutposition (36.2) in der zweiten Messrichtung (Y) bestimmt wird.

6. Positionsmesseinrichtung (10) nach Anspruch 5, wobei die Positionsmesseinrichtung (10) derart ausgebildet ist, dass die Bestimmung der ersten Absolutposition (36.1) in der zweiten Messrichtung (Y) mit einer ersten Auflösung erfolgt, und dass die Bestimmung der zweiten Absolutposition (36.2) in der zweiten Messrichtung (Y) mit einer zweiten Auflösung erfolgt, wobei die erste Auflösung geringer als die zweite Auflösung ist.

7.  Positionsmesseinrichtung (10) nach Anspruch 5 oder 6, wobei die Positionsmesseinrichtung (10) derart ausgebildet ist, dass die zweite Absolutposition (36.2) in der zweiten Messrichtung (Y) in Abhängigkeit eines von den zweiten Abtastsignalen (22.2) abgeleiteten Phasensignals (60) bestimmt wird.

8.  Positionsmesseinrichtung (10) nach einem der Ansprüche 5 bis 7, wobei die Positionsmesseinrichtung (10) derart ausgebildet ist, dass in Abhängigkeit der zweiten Abtastsignale (22.2) eine Relativposition (40) in der zweiten Messrichtung (Y) bestimmt wird, und dass die Relativposition (40) in der zweiten Messrichtung (Y) mit der ersten Absolutposition (36.1) in der zweiten Messrichtung (Y) verknüpft wird, um die zweite Absolutposition (36.2) in der zweiten Messrichtung (Y) zu erhalten.

9.  Positionsmesseinrichtung (10) nach einem der vorhergehenden Ansprüche, wobei die Phasenlage (32) des Referenzimpulses (24) in Bezug auf eine durch die ersten Abtastsignale (22.1) bestimmte Referenzphasenlage (O1) definiert ist und in einem Bereich von -90° bis +90°, vorzugsweise im Bereich von -60° bis +60°, liegt.

10. Positionsmesseinrichtung (10) nach einem der vorhergehenden Ansprüche, wobei die Phasenlage (32) des Referenzimpulses (24) in einem durch einen ersten Grenzwert (32.1) und einen zweiten Grenzwert (32.2) definierten Bereich liegt, wobei der erste Grenzwert (32.1) einem Minimum (36.11) einer in Abhängigkeit der Phasenlage (32) des Referenzimpulses (24) zu bestimmenden ersten Absolutposition (36.1) in der zweiten Messrichtung (Y) zugeordnet ist, wobei der zweite Grenzwert (32.2) einem Maximum (36.12) einer in Abhängigkeit der Phasenlage (32) des Referenzimpulses (24) zu bestimmenden ersten Absolutposition (36.1) in der zweiten Messrichtung (Y) zugeordnet ist, wobei durch das Minimum (36.11) und das Maximum (36.12) ein zulässiger Bereich (D) für die Bestimmung der ersten Absolutposition (36.1) in der zweiten Messrichtung (Y) definiert wird, wobei der zulässige Bereich (D) einer Anzahl von Signalperioden (SP2) der zweiten Abtastsignale (22.2) entspricht, und wobei diese Anzahl in einem Bereich von 2 bis 10 liegt.

11. Positionsmesseinrichtung (10) nach einem der vorhergehenden Ansprüche, wobei die Phasenlage (32) des Referenzimpulses (24) durch einen linearen Zusammenhang (C) gegeben ist, wobei der lineare Zusammenhang (C) durch eine Steigung (RMSPSP) definiert ist, wobei diese Steigung (RMSPSP) mindestens 5° pro Signalperiode der zweiten Abtastsignale (22.2), vorzugsweise 20° oder 30° pro Signalperiode (SP2) der zweiten Abtastsignale (22.2), beträgt,

12. Positionsmesseinrichtung (10) nach einem der vorhergehenden Ansprüche, wobei eine Breite ($\tau$) des Referenzimpulses (24) bezogen auf die ersten Abtastsignale (22.1) in einem Bereich von 180° bis 540°, vorzugsweise im Bereich von 300° bis 420°, liegt.

13. Positionsmesseinrichtung (10) nach einem der vorhergehenden Ansprüche, wobei die erste Richtung (P1) senkrecht zur ersten Messrichtung (X) verläuft.

14. Positionsmesseinrichtung (10) nach einem der vorhergehenden Ansprüche, wobei sich die Teilungsstrukturen (16.2) der zweiten Messteilung (14.2) jeweils parallel zu einer dritten Richtung (P3) erstrecken, wobei die dritte Richtung (P3) senkrecht zur zweiten Messrichtung (Y) verläuft.

**Claims**

1.  Position measurement device (10) having a carrier body (12), having a first measurement graduation (14.1), a second measurement graduation (14.2) and a reference mark (18),

    a first scanning unit (20.1) for scanning the first measurement graduation (14.1) and for generating first scanning signals (22.1), a second scanning unit (20.2) for scanning the second measurement graduation (14.2) and for generating second scanning signals (22.2), and a third scanning unit (20.3) for scanning the reference mark (18) and for generating a reference pulse (24), wherein the first measurement graduation (14.1) comprises a plurality of graduation structures (16.1) that are periodically arranged along a first measurement direction (X), wherein the graduation structures (16.1) of the first measurement graduation (14.1) each extend parallel to a first direction (P1), wherein the second measurement graduation (14.2) comprises a plurality of graduation structures (16.2) that are periodically arranged along a second measurement direction (Y), wherein the first measurement direction (X) and the second measurement direction (Y) extend perpendicular to each other, wherein the reference mark (18) extends in a second direction (P2), wherein the first direction (P1) and the second direction (P2) together form an angle ($\alpha$) that differs from 0°, **characterized in that** the position measurement device (10) is embodied such that a phase position (32) of the reference pulse (24) is determined in dependence on the first scanning signals (22.1) and the reference pulse (24), and **in that** the position measurement device (10) is embodied such that a first absolute position (36.1) in the second measurement direction (Y) is determined in dependence on the phase position (32) of the reference pulse (24).

2. Position measurement device (10) according to Claim 1, wherein the position measurement device (10) is embodied such that the first absolute position (36.1) in the second measurement direction (Y) is determined using a predetermined assignment rule for assigning the phase position (32) of the reference pulse (24) to the first absolute position (36.1) in the second measurement direction (Y).

3. Position measurement device (10) according to Claim 1, wherein the position measurement device (10) is embodied such that the first absolute position (36.1) in the second measurement direction (Y) is determined using a predetermined conversion factor.

4. Position measurement device (10) according to one of the preceding claims, wherein the position measurement device (10) is embodied such that the phase position (32) of the reference pulse (24) is determined in dependence on a phase signal (28) that is derived from the first scanning signals (22.1) .

5. Position measurement device (10) according to one of Claims 1 to 4, wherein the position measurement device (10) is embodied such that a second absolute position (36.2) in the second measurement direction (Y) is determined in dependence on the phase position (32) of the reference pulse (24) and the second scanning signals (22.2) .

6. Position measurement device (10) according to Claim 5, wherein the position measurement device (10) is embodied such that the determination of the first absolute position (36.1) in the second measurement direction (Y) takes place with a first resolution, and such that the determination of the second absolute position (36.2) in the second measurement direction (Y) takes place with a second resolution, with the first resolution being lower than the second resolution.

7. Position measurement device (10) according to Claim 5 or 6, wherein the position measurement device (10) is embodied such that the second absolute position (36.2) in the second measurement direction (Y) is determined in dependence on a phase signal (60) that is derived from the second scanning signals (22.2).

8. Position measurement device (10) according to one of Claims 5 to 7, wherein the position measurement device (10) is embodied such that a relative position (40) in the second measurement direction (Y) is determined in dependence on the second scanning signals (22.2), and such that the relative position (40) in the second measurement direction (Y) is linked to the first absolute position (36.1) in the second measurement direction (Y) to obtain the second absolute position (36.2) in the second measurement direction (Y).

9. Position measurement device (10) according to one of the preceding claims, wherein the phase position (32) of the reference pulse (24) is defined with reference to a reference phase position (O1) that is determined by the first scanning signals (22.1) and lies in a range of -90° to +90°, preferably in the range from -60° to +60°.

10. Position measurement device (10) according to one of the preceding claims, wherein the phase position (32) of the reference pulse (24) lies in a range that is defined by a first limit value (32.1) and a second limit value (32.2), wherein the limit value (32.1) is assigned to a minimum (36.11) of a first absolute position (36.1) in the second measurement direction (Y) that is to be determined in dependence on the phase position (32) of the reference pulse (24), wherein the second limit value (32.2) is assigned to a maximum (36.12) of a first absolute position (36.1) in the second measurement direction (Y) that is to be determined in dependence on the phase position (32) of the reference pulse (24), wherein an admissible range (D) for the determination of the first absolute position (36.1) in the second measurement direction (Y) is defined by the minimum (36.11) and the maximum (36.12), wherein the admissible range (D) corresponds to a number of signal periods (SP2) of the second scanning signals (22.2), and wherein this number lies in a range from 2 to 10.

11. Position measurement device (10) according to one of the preceding claims, wherein the phase position (32) of the reference pulse (24) is given by a linear relationship (C), wherein the linear relationship (C) is defined by a slope (RMSPSP), wherein this slope (RMSPSP) is at least 5° per signal period of the second scanning signals (22.2), preferably 20° or 30° per signal period (SP2) of the second scanning signals (22.2).

12. Position measurement device (10) according to one of the preceding claims, wherein a width ($\tau$) of the reference pulse (24) with respect to the first scanning signals (22.1) lies in a range from 180° to 540°, preferably in the range from 300° to 420°.

13. Position measurement device (10) according to one of the preceding claims, wherein the first direction (P1) extends perpendicular to the first measurement direction (X) .

14. Position measurement device (10) according to one of the preceding claims, wherein the graduation structures (16.2) of the second measurement graduation (14.2) each extend parallel to a third direction (P3), wherein the third direction (P3) extends perpendicular to the second measurement direction (Y).

**Revendications**

1. Dispositif de mesure de position (10), comprenant un corps porteur (12), qui possède une première graduation de mesure (14.1), une deuxième graduation de mesure (14.2) et un repère de référence (18),

   une première unité de palpage (20.1) destinée à palper la première graduation de mesure (14.1) et à générer des premiers signaux de palpage (22.1),
   une deuxième unité de palpage (20.2) destinée à palper la deuxième graduation de mesure (14.2) et à générer des deuxièmes signaux de palpage (22.2), et
   une troisième unité de palpage (20.3) destinée à palper le repère de référence (18) et à générer une impulsion de référence (24),
   la première graduation de mesure (14.1) comportant plusieurs structures de graduation (16.1) disposées périodiquement le long d'une première direction de mesure (X), les structures de graduation (16.1) de la première graduation de mesure (14.1) s'étendant respectivement parallèlement à une première direction (P1),
   la deuxième graduation de mesure (14.2) comportant plusieurs structures de graduation (16.2) disposées périodiquement le long d'une deuxième direction de mesure (Y), la première direction de mesure (X) et la deuxième direction de mesure (Y) suivant un tracé perpendiculaire l'une à l'autre,
   le repère de référence (18) s'étendant dans une deuxième direction (P2), la première direction (P1) et la deuxième direction (P2) formant entre elles un angle ($\alpha$) différent de 0°,
   **caractérisé en ce que** le dispositif de mesure de position (10) est configuré de telle sorte qu'une position de phase (32) de l'impulsion de référence (24) est déterminée en fonction des premiers signaux de palpage (22.1) et de l'impulsion de référence (24), et **en ce que** le dispositif de mesure de position (10) est configuré de telle sorte qu'une première position absolue (36.1) dans la deuxième direction de mesure (Y) est déterminée en fonction de la position de phase (32) de l'impulsion de référence (24).

2. Dispositif de mesure de position (10) selon la revendication 1, le dispositif de mesure de position (10) étant configuré de telle sorte que la première position absolue (36.1) dans la deuxième direction de mesure (Y) est déterminée en utilisant une règle d'association prédéterminée pour associer la position de phase (32) de l'impulsion de référence (24) à la première position absolue (36.1) dans la deuxième direction de mesure (Y).

3. Dispositif de mesure de position (10) selon la revendication 1, le dispositif de mesure de position (10) étant configuré de telle sorte que la première position absolue (36.1) dans la deuxième direction de mesure (Y) est déterminée en utilisant un facteur de conversion prédéterminé.

4. Dispositif de mesure de position (10) selon l'une des revendications précédentes, le dispositif de mesure de position (10) étant configuré de telle sorte que la position de phase (32) de l'impulsion de référence (24) est déterminée en fonction d'un signal de phase (28) dérivé des premiers signaux de palpage (22.1).

5. Dispositif de mesure de position (10) selon l'une des revendications 1 à 4, le dispositif de mesure de position (10) étant configuré de telle sorte qu'une deuxième position absolue (36.2) dans la deuxième direction de mesure (Y) est déterminée en fonction de la position de phase (32) de l'impulsion de référence (24) et des deuxièmes signaux de palpage (22.2).

6. Dispositif de mesure de position (10) selon la revendication 5, le dispositif de mesure de position (10) étant configuré de telle sorte que la détermination de la première position absolue (36.1) dans la deuxième direction de mesure (Y) s'effectue avec une première résolution, et que la détermination de la deuxième position absolue (36.2) dans la deuxième direction de mesure (Y) s'effectue avec une deuxième résolution, la première résolution étant inférieure à la deuxième résolution.

7. Dispositif de mesure de position (10) selon la revendication 5 ou 6, le dispositif de mesure de position (10) étant configuré de telle sorte que la deuxième position absolue (36.2) dans la deuxième direction de mesure (Y) est déterminée en fonction d'un signal de phase (60) dérivé des deuxièmes signaux de palpage (22.2).

8. Dispositif de mesure de position (10) selon l'une des revendications 5 à 7, le dispositif de mesure de position (10) étant configuré de telle sorte qu'une position relative (40) dans la deuxième direction de mesure (Y) est déterminée en fonction des deuxièmes signaux de palpage (22.2), et que la position relative (40) dans la deuxième direction de mesure (Y) est liée à la première position absolue (36.1) dans la deuxième direction de mesure (Y) en vue d'obtenir la deuxième position absolue (36.2) dans la deuxième direction de mesure (Y).

9.  Dispositif de mesure de position (10) selon l'une des revendications précédentes, la position de phase (32) de l'impulsion de référence (24) étant définie en référence à une position de phase de référence (O1) déterminée par les premiers signaux de palpage (22.1) et étant comprise dans une plage de -90° à +90°, de préférence dans la plage de -60° à +60°.

10. Dispositif de mesure de position (10) selon l'une des revendications précédentes, la position de phase (32) de l'impulsion de référence (24) se trouvant dans une plage définie par une première valeur limite (32.1) et une deuxième valeur limite (32.2), la première valeur limite (32.1) étant associée à un minimum (36.11) d'une première position absolue (36.1) dans la deuxième direction de mesure (Y) à déterminer en fonction de la position de phase (32) de l'impulsion de référence (24), la deuxième valeur limite (32.2) étant associée à un maximum (36.12) d'une première position absolue (36.1) dans la deuxième direction de mesure (Y) à déterminer en fonction de la position de phase (32) de l'impulsion de référence (24), une plage admissible (D) pour la détermination de la première position absolue (36.1) dans la deuxième direction de mesure (Y) étant définie par le minimum (36.11) et le maximum (36.12), la plage admissible (D) correspondant à un nombre de périodes de signal (SP2) des deuxièmes signaux de palpage (22.2), et ce nombre étant compris dans une plage de 2 à 10.

11. Dispositif de mesure de position (10) selon l'une des revendications précédentes, la position de phase (32) de l'impulsion de référence (24) étant donnée par une relation linéaire (C), la relation linéaire (C) étant définie par une pente (RMSPSP), cette pente (RMSPSP) étant d'au moins 5° par période de signal des deuxièmes signaux de palpage (22.2), de préférence de 20° ou de 30° par période de signal (SP2) des deuxièmes signaux de palpage (22.2).

12. Dispositif de mesure de position (10) selon l'une des revendications précédentes, une largeur ($\tau$) de l'impulsion de référence (24) rapportée aux premiers signaux de palpage (22.1) étant comprise dans une plage de 180° à 540°, de préférence dans la plage de 300° à 420°.

13. Dispositif de mesure de position (10) selon l'une des revendications précédentes, la première direction (P1) suivant un tracé perpendiculaire à la première direction de mesure (X).

14. Dispositif de mesure de position (10) selon l'une des revendications précédentes, les structures de graduation (16.2) de la deuxième graduation de mesure (14.2) s'étendant respectivement parallèlement à une troisième direction (P3), la troisième direction (P3) suivant un tracé perpendiculaire à la deuxième direction de mesure (Y).

EP 3 789 735 B1

FIG. 1

12

# FIG. 2A

## FIG. 2B

FIG. 3

FIG. 4

# FIG. 5

## FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018108882 A1
- EP 3527951 A1
- DE 102004006067 A1